Europäisches Patentamt

European Patent Office

Office européen des brevets

(19)

(11) Publication number: **0 064 837**
**B1**

(12) **EUROPEAN PATENT SPECIFICATION**

(45) Date of publication of patent specification: **23.07.86**

(51) Int. Cl.⁴: **H 01 M 2/16**

(21) Application number: **82302182.9**

(22) Date of filing: **28.04.82**

(54) **Alkaline battery having a paper separator.**

(30) Priority: **28.04.81 GB 8113114**

(43) Date of publication of application:
**17.11.82 Bulletin 82/46**

(45) Publication of the grant of the patent:
**23.07.86 Bulletin 86/30**

(84) Designated Contracting States:
**AT BE CH DE FR GB IT LI LU NL SE**

(56) References cited:
**FR-A-2 342 155**
**. GB-A-1 530 961**
**GB-A-2 020 086**
**GB-A-2 034 365**
**GB-A-2 057 028**
**GB-A-2 078 769**
**US-A-3 918 994**
**US-A-4 078 123**

**The file contains technical information .
submitted after the application was filed and
not included in this specification**

(73) Proprietor: **The Wiggins Teape Group Limited**
**P.O. Box 88 Gateway House Basing View
Basingstoke Hampshire RG21 2EE (GB)**

(72) Inventor: **Drew, Quentin Miles**
**14 Spurway Road
Tiverton Devon EX16 4ES (GB)**
Inventor: **Nicholas, Roger Philip**
**1 Orchard Way
Cullompton Devon EX15 1EJ (GB)**

(74) Representative: **Norris, Richard John**
**The Wiggins Teape Group Limited Group
Patents Department Butlers Court
Beaconsfield Buckinghamshire HP9 1RT (GB)**

(56) References cited:.
**CHEMICAL ABSTRACTS, vol. 89, no. 18, 30th
October 1978, page 156, no. 149492g,
Columbus, Ohio, USA**

**CHEMICAL ABSTRACTS, vol. 85, no. 4, 23rd
August 1976, page 156, no. 49124s, Columbus,
Ohio, USA**

**Description**

This invention relates to an alkaline battery and is particularly concerned with paper for use as a separator in such a battery (paper for this purpose is sometimes also referred to as battery component paper). The battery may for example be an alkaline manganese battery.

A separator for an alkaline battery may be made from a porous or microporous single or multiple layered electrically non-conductive non-woven fibrous material. The material used for the separator should desirably have the following properties:—

1. Porous nature which will allow a low internal resistance within the battery whilst maintaining the required storage and service life (these characteristics are to some extent incompatible in that whereas the presence of pores affords the conductivity necessary for low internal resistance, they also give rise to the danger of shorting as a result of dendritic growth through the pores which reduces battery life—it is therefore necessary to select a suitable compromise).

2. The strength to withstand stresses arising during assembly of the battery, for example folding and insertion into a battery can.

3. Dimensional stability in an alkaline environment.

4. Wettability by the electrolyte.

5. Absorbency with respect to the electrolyte.

6. Resistance to degradation by electrolyte or other battery chemicals.

For certain types of alkaline battery, in which a separator of preformed shape is employed, it is in addition desirable that the separator material should be heat sealable, so as to facilitate the preforming operation.

One widely used type of conventional alkaline battery separator comprises one or more layers of non-woven fibrous material.

This conventional material utilises expensive synthetic fibres and, by virtue of the forming process is expensive to produce.

A wet-laid paper made from cellulose fibres, either alone or in a blend with synthetic fibres, e.g. polyolefin fibres, might at first sight be thought to afford a route to a cheaper battery paper. However, although such paper has absorbency, it has a high shrinkage in alkaline solution.

Proposals have been made to form an alkaline battery separator from a paper web formed by conventional paper-making techniques from a blend of polyolefin synthetic pulp fibres and other synthetic fibres, see for example UK Patent Application No. 2057028A, which also requires the presence of an alkali-resistant inorganic filler, and UK Patent Application No. 2034365A. Heat bonding is either a preferred or essential feature of these proposals and would be expected to be a drawback in view of the difficulty of controlling the degree of heat bonding so as to achieve reproducible separator properties.

Papers derived from a blend of polyolefin synthetic pulp fibres and other synthetic fibres have also been proposed for separators of acid batteries. However it should be appreciated that conventional lead-acid and secondary alkaline battery systems have certain components such as electrodes, electrolytes, separators, etc., which, though commonly named, are distinctly different entities having different functions and are required to have different physical and chemical properties.

It has now been found that a good alkaline battery separator paper may be made from a blend of polyolefin synthetic pulp fibres and other fibres without heat bonding if an alkali-resistant hydrophilic binder is used to bond the fibres together. No filler need be used.

According to the invention, there is provided an alkaline battery of which the separator is of paper comprising a blend of polyolefinic synthetic pulp fibres and alkali-resistant fibres which are effective to reinforce the polyolefinic fibres, characterised in that the synthetic pulp fibres are not heat-bonded to each other or to the reinforcing fibres but are bonded to each other and the reinforcing fibres by means of an alkali-resistant polyvinyl alcohol binder which is present in an amount of at least 5% by weight, based on the total weight of the paper of which the separator is made.

"Polyolefinic synthetic pulp fibres" are fibres sold for use in papermaking. They exhibit a high degree of fibrillation (in contrast to chopped staple fibres). Suitable fibres, for example are those supplied under the names "Pulpex" by Solvay, "SWP" by Crown Zellerbach, "Hostapulp" by Hoechst and "Ferlosa" by Montedison. The polyolefin fibres are preferably polyethylene fibres but polypropylene fibres may be used. Polyethylene fibres have so far been found to afford better pore size characteristics.

Since polyolefins are hydrophobic in nature, it is necessary for synthetic pulp fibres to be specially modified to make them water-dispersible. Such modification may take the form of a coating of hydrophilic material on each fibre. The hydrophilic material may be a chemical of the kind used in papermaking binders.

The reinforcing fibres are preferably polyvinyl alcohol fibres, although rayon, PVC, nylon or other chemically resistant fibres may be used. The reinforcing fibres are conveniently chopped staple fibres, but in principle need not be. The reinforcing fibres may be chopped staple polyolefinic fibres.

As stated above, it is important to avoid heat bonding in making paper for use as a separator in the present battery. This has been found to result in alteration of the microfibrillar structure of the web—the individual fibres shrivel as they are heated causing the pore size to increase. This then encourages dendrite growth in the battery and also increases the hydrophobicity of the separator. A further disadvantage is that

2

in any event a heat consolidation step is difficult to control and thus reproducible separator properties are difficult to achieve. In contrast, use of a polyvinyl alcohol binder for bonding permits relatively easy control of paper web properties.

In order to ensure that heat bonding does not occur, the maximum temperature which the web reaches in drying or other treatment must be carefully controlled so as to be below the softening temperature range of the fibres being used. Clearly the web temperature should be sufficiently below the softening threshold of the lowest softening fibres in the web to prevent heat bonding of the fibres. It is difficult to measure web temperature precisely and so it is convenient to refer to drying cylinder surface temperatures which should normally be maintained at least 10—20°C below the softening threshold. A temperature at least 30°C below the softening threshold has so far been found preferable. The softening temperature range for polyethylene synthetic pulp is usually about 125—130°C. For paper made from such pulp, drying cylinder temperatures should preferably not exceed about 95°C, although higher temperatures, say up to about 105°C, may be usable. Should it be found that heat bonding is occurring the skilled man will have no difficulty in establishing by routine experiment a temperature at which heat bonding no longer occurs, particularly in view of the guidance given above.

For polypropylene, the softening range is about 160—165°C and so the web temperature should desirably not exceed about 130°C, although higher temperatures may be tolerated.

Preferably the polyolefinic synthetic pulp is present in an amount of from about 30% to about 85% by weight of the total fibre content of the paper.

The polyvinyl alcohol binder is preferably added in an amount of from 5 to 15% by weight, based on the total weight of the web.

Preferably the binder is incorporated in the web by size press application, although other methods may be employed, for example gravure roll application, spraying or impregnation. At least a proportion of the binder may be added to the stock before web formation.

It may also be desirable to add a surfactant to enhance the wettability of the separator. The surfactant should be selected so as not to inhibit the chemical reactions which take place within the battery cells. The surfactant is preferably added with the binder, to the stock before web formation or subsequently to the dry sheet.

The paper preferably incorporates a small amount of a wet-strength agent.

It has been found that the use of a filler, either as a loading or fibre inclusion, is not required in the present separator paper. However, such a filler may if desired be employed, provided it is not detrimental to the separator properties.

Preferably the density of the present paper is increased by pressing. The preferred density is in the range from 0.170 g cm$^{-3}$ to 0.335 g cm$^{-3}$.

The maximum pore diameter and air resistance of the paper may vary widely, as will be seen from the Examples hereafter.

This is advantageous because the battery maker is provided with a wider variety of papers having different properties thus giving a wider scope for battery design.

The separator may comprise one ply of the present paper, or more than one ply. In the latter case the plies are preferably of the same paper, but need not be. An advantage of a multiply separator is that each ply may have a large pore size so as to afford good conductivity and a low internal resistance, since the presence of several plies means that coincidence of large holes (which might promote shorting) is avoided. The plies may be separately formed on a Fourdrinier papermachine or a Rotiformer or may be made in one step by the use of, for example, a secondary headbox.

The total grammage of the separator is preferably in the range 30 to 100 gm$^{-2}$ and more preferably in the range 60—100 gm$^{-2}$ which may be made up, for example of 3×20 gm$^{-2}$ sheets or 2×50 gm$^{-2}$ sheets or may be a single sheet of that grammage.

By suitably choosing the grammage, density, fibre furnish and the binder, a separator paper of good handleability and desired physical properties (e.g. absorbency, porosity etc) can be obtained. Guidance as to this choice may be obtained from the Examples given later.

The present battery paper affords the advantages of cheapness, and, when converted into a separator and used in an alkaline battery affords good storage and shelf life, and good discharge rate.

The invention will now be illustrated by reference to the following examples.

Example 1

A number of sheets of battery paper of nominal grammage 90 gm$^{-2}$ were prepared on a standard laboratory sheet machine from 0.5% consistency stock comprising 70% polyethylene fibres ("Pulpex A" marketed by Solvay), 30% polyvinyl alcohol fibres ("Mewlon F" marketed by Unitakei Ltd.), and a wet strength agent ("Kymene" marketed by Hercules) added in an amount of 2% based on the total fibre content.

The resulting sheets were pressed in the wet state and then subjected to three different pressing treatments using laboratory pressing equipment to produce sheets of low, medium and high density. In all three cases the sheet was then dried on a rotary drier (at a surface temperature of approximately 95°C). A laboratory size press was then used to add polyvinyl alcohol binder to give a 15% dry pick up (the binder used was that supplied as "Mowiol 4—98" by Hoechst Aktiengesellschaft in 10% solids content solution.

3

The physical properties of each sheet were tested in all three cases to give the following results as shown in Table 1.

TABLE 1

| Physical properties | Sample | | |
|---|---|---|---|
| | Low density | Medium density | High density |
| Grammage (gm$^{-2}$) | 92 | 93 | 90 |
| Thickness (SIG) μm | 530 | 450 | 330 |
| Density gcm$^{-3}$ | 0.174 | 0.207 | 0.272 |
| Tensile N/25 mm | 64 | 56 | 60 |
| Air resistance mm W.G.* | 122 | 143 | 246 |
| Max pore diameter μm | 30 | 23 | 18 |
| Klemm absorbency 30% KOH mm min$^{-1}$ | 24 | 20 | 19 |

*This is a measure of the porosity of the paper. (W.G.=Water Gauge)

The dimensional stability of each paper in 30% potassium hydroxide solution at 70°C for 48 hours was also tested (this is intended to afford an indication of how the paper would withstand an alkaline environment over a long period of time when incorporated in a battery). In each case the papers were found to be stable.

Example 2
This Example illustrates the use of a different furnish from that used in Example 1.
The battery paper was made in the same way as the low density paper in Example 1 except that the furnish used consisted of 85% polyethylene fibres with 15% polyvinyl alcohol fibres. The physical properties of the resulting sheet are shown in Table 2.

TABLE 2

| Physical properties | Sample |
|---|---|
| Grammage (gm$^{-2}$) | 90 |
| Thickness (SIG) μm | 495 |
| Density gcm$^{-3}$ | 0.182 |
| Tensile N/25 mm | 44 |
| Air resistance mm W.G. | 163 |
| Max. pore diameter μm | 19.5 |
| Klemm absorbency 30% KOH mm min$^{-1}$ | 18 |

The paper was also tested for stability in potassium hydroxide as described in Example 1 above and was found to be stable.

Example 3
This example illustrates the use of papers of different grammage and varying density. The procedure was generally as described in Example 1 and the results are shown in Table 3.

TABLE 3

| Physical properties | Sample | | | |
|---|---|---|---|---|
| Grammage gm$^{-2}$ | 62.5 | 62 | 78 | 77 |
| Thickness (SIG) μm | 300 | 230 | 340 | 255 |
| Density gcm$^{-3}$ | 0.208 | 0.269 | 0.229 | 0.302 |
| Tensile N/25 mm | 45 | 44 | 54 | 47.5 |
| Air resistance mm W.G. | 185 | 264 | 205 | 277 |
| Max. pore diameter μm | 30.7 | 23.8 | 28.4 | 23.3 |
| Klemm absorbency 30% KOH mm min$^{-1}$ | 20 | 25 | 20 | 28 |

Each sheet was also tested for stability in potassium hydroxide as described in Example 1 above and in each case it was found to be stable.

Example 4

This example illustrates the use of different reinforcing fibres and different furnishes.

The procedure was generally as described in Example 1 except that rayon was used in place of polyvinyl alcohol fibres and in combination with polyvinyl alcohol fibres.

The following furnishes were tested:

Sample (1)       70% Pulpex A
                       30% 6 mm 1.5 den. Rayon

Sample (2)       30% Pulpex A
                       45% Short-fibre Rayon
                       25% 6 mm 1.5 den. Rayon

Sample (3)       30% Pulpex A
                       45% Short-fibre Rayon
                       25% Polyvinyl alcohol fibre

Sample (4)       50% Pulpex A
                       30% Polyvinyl alcohol fibre
                       20% Short-fibre Rayon

The results are shown in Table 4.

TABLE 4

| Physical properties | Sample | | | |
|---|---|---|---|---|
| | (1) | (2) | (3) | (4) |
| Grammage gm$^{-2}$ | 75 | 75 | 76 | 50 |
| Thickness (SIG) μm | 305 | 305 | 295 | 230 |
| Density gcm$^{-3}$ | 0.246 | 0.246 | 0.258 | 0.217 |
| Tensile N/25 mm | 28 | 30 | 54 | 20 |
| Air resistance | 426 | 67 | 69 | 96.7 |
| Max. pore diameter μm | 18.3 | 40.4 | 40.7 | 35.3 |
| Klemm absorbency 30% KOH mm min$^{-1}$ | 18 | 22 | 25 | 29 |

Each sheet was also tested for stability in potassium hydroxide as described in Example 1 above and in each case it was found to be stable.

5

Example 5

This example illustrates the effect of wet pressing on density and pore size.

A furnish of 30% Pulpex A and 70% 6 mm 1.5 den rayon was made into two samples and one subjected to light pressing and the other to more heavy pressing.

The results are shown in Table 5.

TABLE 5

| Physical properties | Sample | |
|---|---|---|
| | Light pressing | Heavy pressing |
| Grammage gm$^{-2}$ | 75 | 77 |
| Thickness (SIG) μm | 330 | 230 |
| Density gcm$^{-3}$ | 0.227 | 0.334 |
| Tensile N/25 mm | 41 | 49 |
| Air resistance mm W.G. | 38 | 112 |
| Max. pore diam. μm | 49.5 | 32.0 |
| Klemm absorbency 30% KOH mm min$^{-1}$ | 24 | 23 |

Each sheet was also tested for stability in potassium hydroxide as described in Example 1 above and in each case it was found to be stable.

When papers produced as described in the above examples were incorporated into test alkaline manganese batteries, they were found to function satisfactorily.

**Claims**

1. An alkaline battery of which the separator is of paper comprising a blend of polyolefinic synthetic pulp fibres and alkali-resistant fibres which are effective to reinforce the polyolefinic fibres, characterized in that the synthetic pulp fibres are not heat-bonded to each other or to the reinforcing fibres but are bonded to each other and the reinforcing fibres by means of an alkali-resistant polyvinyl alcohol binder which is present in an amount of at least 5% by weight, based on the total weight of the paper of which the separator is made.

2. An alkaline battery as claimed in claim 1 characterized in that the polyolefinic synthetic pulp is present in an amount of from 30% to 85% by weight of the total fibre content of the paper of which the separator is made.

3. An alkaline battery as claimed in claim 1 or 2 characterized in that the alkali-resistant fibres which are effective to reinforce the polyolefinic fibres are of polyvinyl alcohol, rayon, PVC or nylon.

4. An alkaline battery as claimed in any preceding claim characterized in that the total grammage of the paper of which the separator is made is in the range from 60 g m$^{-2}$ to 100 g m$^{-2}$.

5. An alkaline battery as claimed in any preceding claim characterized in that the density of the paper of which the separator is made is in the range from 0.170 g cm$^{-3}$ to 0.335 g cm$^{-3}$.

6. An alkaline battery as claimed in any preceding claim, characterized in that the thickness of the paper of which the separator is made is in the range of 230 to 495 μm.

7. An alkaline battery as claimed in any preceding claim, characterized in that the tensile strength of the paper of which the separator is made is in the range of 20 to 64 N/25 mm.

8. An alkaline battery as claimed in any preceding claim, characterized in that the maximum pore diameter of the paper of which the separator is made is in the range of 18 to 49.5 μm.

9. An alkaline battery as claimed in any preceding claim, characterized in that the Klemm absorbency of the paper of which the separator is made in 30% potassium hydroxide solution is in the range of 18 to 29 mm min$^{-1}$.

10. An alkaline battery as claimed in any preceding claim, characterized in that the paper of which the separator is made carries no filler.

11. An alkaline battery as claimed in any preceding claim characterized in that the battery is an alkaline manganese battery.

**Patentansprüche**

1. Alkalibatterie, bei welcher der Separator aus Papier, bestehend aus einer Mischung von synthetischen Polyolefinpapierfasern und alkaliresistenten Fasern, die zur Verstärkung der Polyolefinfasern dienen, besteht, dadurch gekennzeichnet, daß die synthetischen Papierfasern nicht miteinander oder mit den verstärkenden Fasern wärmeverschweißt sondern miteinander und den verstärkenden Fasern mittels eines alkaliresistenten Bindemittels aus Polyvinylalkohol verbunden sind, das in einem Betrag von mindestens 5 Gew.% bezogen auf das Gesamtgewicht des Papiers, aus dem der Separator besteht, vorliegt.

2. Alkalibatterie nach Anspruch 1, dadurch gekennzeichnet, daß die synthetische Polyolefinpulpe in einem Betrag von 30 Gew.% bis 85 Gew.% des Gesamtfaseranteils des Papiers, aus dem der Separator hergestellt ist, vorhanden ist.

3. Alkalibatterie nach Anspruch 1 oder 2, dadurch gekennzeichnet, daß die alkaliresistenten Fasern, die zur Verstärkung der Polyolefinfasern dienen, aus Polyvinylalkohol, Rayon, PVC oder Nylon bestehen.

4. Alkalibatterie nach einem der vorhergehenden Ansprüche, dadurch gekennzeichnet, daß das Gesamtflächengewicht des Papiers, aus dem der Separator hergestellt ist, im Bereich von 60 g m$^{-2}$ bis 100 g m$^{-2}$ liegt.

5. Alkalibatterie nach einem der vorhergehenden Ansprüche, dadurch gekennzeichnet, daß die Dichte des Papiers, aus dem der Separator hergestellt ist, im Bereich von 0,170 g cm$^{-3}$ bis 0,335 g cm$^{-3}$ liegt.

6. Alkalibatterie nach einem der vorhergehenden Ansprüche, dadurch gekennzeichnet, daß die Dicke des Papiers, aus dem der Separator hergestellt ist, im Bereich von 230 bis 495 μm liegt.

7. Alkalibatterie nach einem der vorhergehenden Ansprüche, dadurch gekennzeichnet, daß die Zugfestigkeit des Papiers, aus dem der Separator hergestellt ist, im Bereich von 20 bis 64N/25 mm liegt.

8. Alkalibatterie nach einem der vorhergehenden Ansprüche, dadurch gekennzeichnet, daß der maximale Porendurchmesser des Papiers, aus dem der Separator hergestellt ist, im Bereich von 18 bis 49,5 μm liegt.

9. Alkalibatterie nach einem der vorhergehenden Ansprüche, dadurch gekennzeichnet, daß die Klemm-Saugfähigkeit des Papiers, aus dem der Separator hergestellt ist, bei Verwendung einer 30%igen Kaliumhydroxidlösung im Bereich von 18 bis 29 mm min$^{-1}$ liegt.

10. Alkalibatterie nach einem der vorhergehenden Ansprüche, dadurch gekennzeichnet, daß das Papier, aus welchem der Separator hergestellt ist, keine Füllstoffe enthält.

11. Alkalibatterie nach einem der vorhergehenden Ansprüche, dadurch gekennzeichnet, daß die Batterie eine alkalische Manganbatterie ist.

**Revendications**

1. Batterie alcaline dont le séparateur est en papier constitué d'un mélange de fibres de pâte synthétique polyoléfinique et de fibres résistant aux substances alcalines qui conviennent pour renforcer les fibres polyoléfiniques, caractérisée en ce que les fibres de pâte synthétique ne sont pas liées thermiquement les unes aux autres ou aux fibres de renforcement, mais sont liées les unes aux autres et aux fibres de renforcement à l'aide d'un liant à base d'alcool polyvinylique résistant aux substances alcalines, qui est présent en une proportion d'au moins 5% en poids, sur base du poids total du papier dont le séparateur est fabriqué.

2. Batterie alcaline suivant la revendication 1, caractérisée en ce que la pâte synthétique polyoléfinique est présente en une quantité de 30 à 85% en poids par rapport à la teneur totale en fibres du paper dont le séparateur est fabriqué.

3. Batterie alcaline suivant la revendication 1 ou 2, caractérisée en ce que les fibres résistant aux substances alcalines qui sont efficaces pour renforcer les fibres polyoléfiniques sont constituées d'alcool polyvinylique, de rayonne, de polychlorure de vinyle ou de nylon.

4. Batterie alcaline suivant l'une quelconque des revendications précédentes, caractérisée en ce que la grammage total du papier dont le séparateur est constitué varie de 60 gm$^{-2}$ à 100 gm$^{-2}$.

5. Batterie alcaline suivant l'une quelconque des revendications précédentes, caractérisée en ce que le poids spécifique du papier dont le séparateur est constitué varie de 0,170 g cm$^{-3}$ à 0,335 g cm$^{-3}$.

6. Batterie alcaline suivant l'une quelconque des revendications précédentes, caractérisée en ce que l'épaisseur du papier dont le séparateur est constitué varie de 230 à 495 μ.

7. Batterie alcaline suivant l'une quelconque des revendications précédentes, caractérisée en ce que la résistance à la traction du papier dont le séparateur est constitué varie de 20 à 64 N/25 mm.

8. Batterie alcaline suivant l'une quelconque des revendications précédentes, caractérisée en ce que le diamètre maximal des pores du papier dont le séparateur est constitué se situe dans la plage de 18 à 49,5 μ.

9. Batterie alcaline suivant l'une quelconque des revendications précédentes, caractérisée en ce que le pouvoir d'absorption Klemm du papier dont le séparateur est constitué varie de 18 à 29 mm min$^{-1}$ en solution à 30% d'hydroxyde de potassium.

10. Batterie alcaline suivant l'une quelconque des revendications précédentes, caractérisée en ce que le papier dont le séparateur est constitué ne comporte pas de charge.

11. Batterie alcaline suivant l'une quelconque des revendications précédentes, caractérisée en ce que la batterie est une batterie alcaline au manganèse.